# DEMANDE DE BREVET EUROPEEN

(11) **EP 0 847 794 A1**
(43) Date de publication de la demande: **17.06.1998**
(21) Numéro de dépôt: 97402973.8
(22) Date de dépôt: 09.12.1997
(51) Int. Cl.: B01D 53/32, B01J 19/12, C01B 23/00

(54) **Procédé d'épuration d'un gaz, et installation pour la mise en oeuvre d'un tel procédé**

(30) Priorité: 13.12.1996 FR 9615370
(71) Demandeur: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Rostaing, Jean-Christophe, 78530 Buc (FR); Parent, Jean-Claude, 92380 Garches (FR); Bryselbout, Francis, 78320 Le Mesnil St. Denis (FR); Moisan, Michel, Outremont, QC, H2V 2Z1 (CA)
(74) Mandataire: Vesin, Jacques

(57) **Abrégé**

Ce procédé d'épuration d'un gaz, comporte les étapes consistant à:
- faire circuler ledit gaz dans un tube creux diélectrique (16) ;
- créer dans ledit gaz un champ électrique au moyen d'une onde électromagnétique progressive circulant dans ledit tube diélectrique (16) et adapté pour créer dans le gaz un plasma (18) à pression atmosphérique hors d'équilibre thermodynamique local en vue de la dissociation des impuretés du gaz pour former des composés réactifs ; et
- faire réagir lesdits composés réactifs formés avec un élément réactif (22,24) correspondant en vue de leur élimination du gaz à épurer.

## Description

La présente invention est relative à un procédé d'épuration d'un gaz, en particulier d'un gaz rare plasmagène, destiné par exemple à l'épuration du krypton et du xénon en tétrafluorométhane et en méthane, ainsi qu'à une installation d'épuration mettant en oeuvre un tel procédé.

Les gaz rares sont généralement extraits de l'air par distillation. Ils contiennent, après distillation, des impuretés qu'il est nécessaire d'extraire avant leur utilisation.

Ainsi, dans le cas du krypton et du xénon, les impuretés sont constituées principalement par du tétrafluorométhane (CF₄) et du méthane (CH₄) à des niveaux pouvant atteindre quelques centaines de parties par millions en volume (ppmv). Les applications les plus courantes de ces gaz rares nécessitent des produits de haute pureté et la présence de ces molécules étrangères est un inconvénient rédhibitoire pour ces applications.

Par exemple, le krypton est largement utilisé pour le remplissage sous vide partiel des lampes à incandescence. Dans cette application, la température très élevée à laquelle est porté le filament de tungstène de ces lampes est suffisante pour provoquer la dissociation du tétrafluorométhane en radicaux fluorés très corrosifs, ce qui provoque la dégradation rapide du filament par attaque chimique du métal.

En outre, le méthane est également dissocié, dans ces conditions de température, et engendre des précurseurs gazeux instables qui viennent former des dépôts solides carbonés d'aspect brunâtre sur la surface interne de l'ampoule.

La purification des gaz rares ne peut, de façon connue et pour des raisons techniques, être accomplie par distillation.

Les techniques de purification connues à ce jour sont basées essentiellement sur des phénomènes thermiques.

De telles techniques permettent de décomposer et/ou d'oxyder facilement le CH₄ mais sont inadaptées pour l'élimination du CF₄ qui est une molécule extrêmement stable et peu réactive.

Par ailleurs, la molécule de CF₄ ne réagissant sensiblement avec aucun milieu solide ou liquide à température ambiante, la transformation chimique du CF₄ nécessite d'atteindre des températures de réaction très élevées et de communiquer au milieu gazeux une enthalpie considérable.

Si l'on procède par combustion, il est nécessaire d'utiliser des flux très importants de gaz combustible, de l'hydrogène en général, ce qui pose des problèmes de coût de traitement, de sécurité et de contrainte d'implantation en raison de la chaleur dégagée. Par ailleurs, une telle technique n'est pas adaptée pour abaisser des concentrations en impuretés déjà faibles à un niveau négligeable.

Une autre technique connue d'épuration est basée sur une décomposition thermochimique par réaction sur un métal approprié, par exemple le zirconium. Cette technique est relativement efficace et ne nécessite pas d'apport très important de gaz combustible. Elle présente toutefois de nombreux inconvénients, notamment en raison du fait qu'il n'est pas possible d'épurer des gaz avec un débit élevé et que sa mise en oeuvre nécessite une installation ayant un encombrement important.

En outre, cette technique requiert une température de fonctionnement assez élevée, par exemple de l'ordre de 900 à 1000°C, et les lits de métaux utilisés sont très coûteux et d'une durée de vie limitée.

Pour les raisons exposées ci-dessus, l'épuration des gaz rares constitue à ce jour la principale cause de limitation de l'efficacité des chaînes de production de ces gaz.

Le but de l'invention est de fournir un procédé d'épuration de gaz et une installation d'épuration pour la mise en oeuvre d'un tel procédé permettant de pallier les inconvénients cités précédemment.

Elle a donc pour objet un procédé d'épuration d'un gaz caractérisé en ce qu'il comporte les étapes consistant à:
- faire circuler ledit gaz à épurer dans un tube creux diélectrique ;
- créer dans ledit gaz un champ électrique au moyen d'une onde électromagnétique progressive circulant dans ledit tube diélectrique et adaptée pour créer dans le gaz un plasma à pression atmosphérique hors d'équilibre thermodynamique local en vue de la dissociation des impuretés du gaz pour former des composés réactifs ; et
- faire réagir lesdits composés réactifs formés avec un élément réactif correspondant en vue de leur élimination du gaz à épurer.

Le procédé selon l'invention peut en outre comporter une ou plusieurs des caractéristiques suivantes:
- l'onde électromagnétique est une onde de surface produite au moyen d'un excitateur d'onde de surface du type surfatron-guide ;
- ledit champ électrique étant créé dans une zone du tube diélectrique, il comporte en outre une étape de réglage de la dimension longitudinale de ladite zone pour régler la longueur dudit plasma ;
- on ajoute de l'oxygène audit gaz à épurer, préalablement à l'étape de circulation du gaz dans le tube diélectrique ;
- l'étape consistant à faire réagir les composés réactifs consiste à faire réagir les composés réactifs avec un élément alcalin, notamment de la chaux sodée ou une solution aqueuse alcaline ;
- le procédé comporte en outre une étape de déshydratation du gaz postérieure à l'étape de réaction des composés réactifs avec un élément réactif correspondant ;
- ledit gaz rare à épurer est composé de krypton, ou de xénon ;
- les impuretés dudit gaz sont choisies parmi le méthane et les gaz perfluorés, notamment le tétrafluorométhane.

L'invention a également pour objet une installation d'épuration d'un gaz, pour la mise en oeuvre d'un procédé d'épuration, caractérisée en ce qu'elle comporte au moins un excitateur d'onde progressive à haute fréquence associé à un guide d'onde adapté pour acheminer les ondes progressives produites par lesdits au moins un excitateur d'onde vers au moins un tube creux diélectrique dans lequel ledit gaz est destiné à circuler, pour y créer un plasma à pression atmosphérique d'ionisation et d'excitation des molécules dudit gaz à épurer en vue de la dissociation des impuretés dudit gaz pour former des composés réactifs, notamment fluorés, et au moins une unité de traitement desdits composés réactifs disposée en sortie d'un tube creux diélectrique correspondant.

Cette installation peut en outre comporter une ou plusieurs des caractéristiques suivantes :
- chaque excitateur est constitué par un excitateur d'onde de surface et un manchon cylindrique en matériau conducteur à l'intérieur duquel est monté un tube diélectrique correspondant et comporte une zone de concentration des ondes incidentes dans un espace compris entre la paroi interne dudit excitateur et une extrémité libre dudit manchon en vue d'y créer un champ électrique coaxial audit tube ;
- ledit manchon comporte un cylindre interne dans lequel est monté ledit tube diélectrique et un cylindre externe délimitant avec ledit cylindre interne une chambre de refroidissement alimentée en un liquide de refroidissement ;
- ledit manchon et ledit tube diélectrique sont séparés par un espace cylindrique et l'installation comporte des moyens d'alimentation dudit espace en un gaz de refroidissement ;
- ledit tube diélectrique est constitué de silice;
- chaque excitateur est muni de moyens de réglage d'impédance comportant un piston formant piège en quart d'onde coaxial audit manchon et et monté axialement déplaçable dans ledit excitateur ;
- l'installation comporte en outre des moyens de réglage de la dimension longitudinale du plasma créé dans le tube creux diélectrique ;
- la paroi de chaque excitateur voisine de la zone de concentration des ondes incidentes est amincie ;
- la partie amincie de la paroi de chaque excitateur est constituée par une pièce rapportée soudée au reste de ladite paroi ;
- lesdites au moins une unité de traitement desdits composés réactifs sont constituées chacune par une cartouche de chaux sodée ;
- l'installation comporte un humidificateur disposé en amont de la cartouche de chaux sodée ;
- l'installation comporte en outre une unité de déshydratation dudit gaz à épurer disposée en aval de ladite unité de traitement desdits composés réactifs ;
- lesdits excitateurs d'onde de surface sont constitués chacun par un excitateur de type surfatron-guide.

D'autres caractéristiques et avantages ressortiront de la description suivante, donnée uniquement à titre d'exemple et faite en référence aux dessins annexés sur lesquels :
- la figure 1 est une vue schématique d'une installation d'épuration de gaz selon l'invention dans le cas où l'applicateur de champ électrique est un excitateur d'onde de surface du type surfatron-guide;
- la figure 2 est une vue en coupe longitudinale du réacteur de traitement de l'installation de la figure 1 montrant l'excitateur de plasma ;
- la figure 3 est une vue de détail d'une partie de l'installation de la figure 1 montrant le raccord entre le tube diélectrique et le reste du circuit de traitement ;
- la figure 4 est un spectre infrarouge du krypton en sortie de l'installation de la figure 1 en l'absence de plasma ; et
- la figure 5 montre des spectres infrarouges du krypton en sortie du tube diélectrique après traitement par le plasma, et après passage sur de la chaux sodée puis sur un gel de silice.

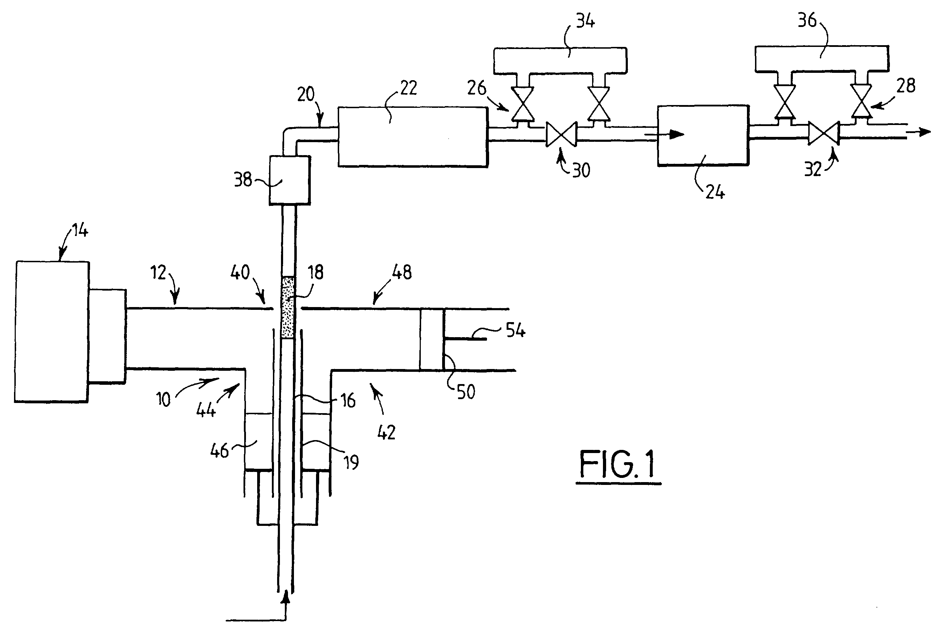

Sur la figure 1, on a représenté une vue schématique d'une installation d'épuration de gaz plasmagènes, en particulier des gaz rares tels que du krypton ou du xénon.

La description de l'installation d'épuration qui va suivre ainsi que de son fonctionnement s'applique à l'épuration du krypton et du xénon.

Bien entendu, l'invention s'applique également au traitement d'autres gaz, tels que Aᵣ,N₂,Nₑ,Kᵣ,Xₑ,Hₑ,O₂,CO₂,H₂ ou à un mélange de ces gaz.

Le but de cette installation est de placer le gaz plasmagène à traiter dans un champ électrique suffisamment intense pour réaliser une décharge électrique par ionisation des molécules du gaz, provoquée par l'arrachement d'électrons des molécules du gaz initialement neutres.

Par gaz plasmagène, on entend un gaz dans lequel la décharge est créée sous l'action du champ électrique et dont les propriétés de la décharge, à savoir la fonction de distribution électronique et les paramètres physico-chimiques, sont déterminés par le gaz dans lequel est créée la décharge.

La possibilité de créer sous l'action du champ électrique dans le gaz à épurer une décharge de caractéristiques appropriées à la mise en oeuvre de l'invention est essentiellement gouvernée par la nature de ce gaz, et relativement indépendante de celle des impuretés dans la mesure où leur concentration demeure faible, typiquement de l'ordre de quelques centaines de ppmv.

Sous l'action de la décharge, les molécules du gaz sont dissociées pour former des radicaux de tailles plus petites que les molécules initiales, et, par suite, des atomes individuels.

Les atomes ou les molécules, selon le cas, du gaz à purifier sont excités et les molécules sont dissociées dans la décharge en atomes ou fragments de molécules. Les espèces excitées et/ou dissociées ne donnent cependant lieu à pratiquement aucune réaction chimique, soit du fait de leur nature intrinsèque (gaz rare) soit parce que l'on n'introduit pas dans la décharge en quantité importante d'autre gaz susceptible de réagir avec le gaz à traiter. Après passage dans la décharge, les atomes ou molécules du gaz à purifier se désexcitent et/ou se recombinent et se retrouvent ainsi intactes en sortie de la décharge.

Au contraire, les impuretés, qui sont, comme décrit précédemment, des molécules nuisibles vis à vis d'un procédé ultérieur utilisant le gaz à épurer et présentes en faible quantité, subissent par excitation une dissociation et une transformation irréversible par formation de nouveaux fragments moléculaires ayant des propriétés chimiques différentes de celles des molécules initiales et qui soit sont susceptibles d'être traités par réaction sur un solide ou un liquide appropriés, soit se condensent immédiatement et spontanément en dépôts ou particules solides.

L'installation d'épuration, selon un mode de réalisation de l'invention, est destinée à être montée en sortie d'une installation de distillation d'air, pour l'extraction du krypton et du xénon en vue de la destruction des molécules d'impuretés, telles que le CF₄ et le CH₄ en convertissant ces impuretés en composés gazeux réactifs susceptibles d'être traités par action de composés réactifs correspondants. Elle peut également être implantée en aval d'une installation de séparation du krypton et du xénon par distillation. Enfin, elle peut constituer une installation d'épuration indépendante, alimentée à partir de bouteilles où sont stockés sous pression du krypton, du xénon, ou un mélange de ces deux gaz.

Pour assurer cette épuration, l'installation selon l'invention comporte un dispositif applicateur de champ à haute fréquence, désigné par la référence numérique 10, constitué par un excitateur d'onde de surface, relié, par l'intermédiaire d'un guide d'onde 12, à un générateur de micro-ondes 14.

L'installation comporte en outre, associé à l'excitateur d'onde de surface 10, un tube à décharge 16 en matériau diélectrique, tel que de la silice, dans lequel circule un gaz plasmogène à épurer.

L'excitateur d'onde de surface 10, également désigné applicateur de champ à haute fréquence, est constitué par un applicateur de type surfatron-guide assurant, en coopération avec le guide d'onde 12, l'acheminement du rayonnement micro-onde créé par le générateur de micro-ondes 14 vers le tube à décharge 16 pour créer dans la gaz à épurer un plasma 18.

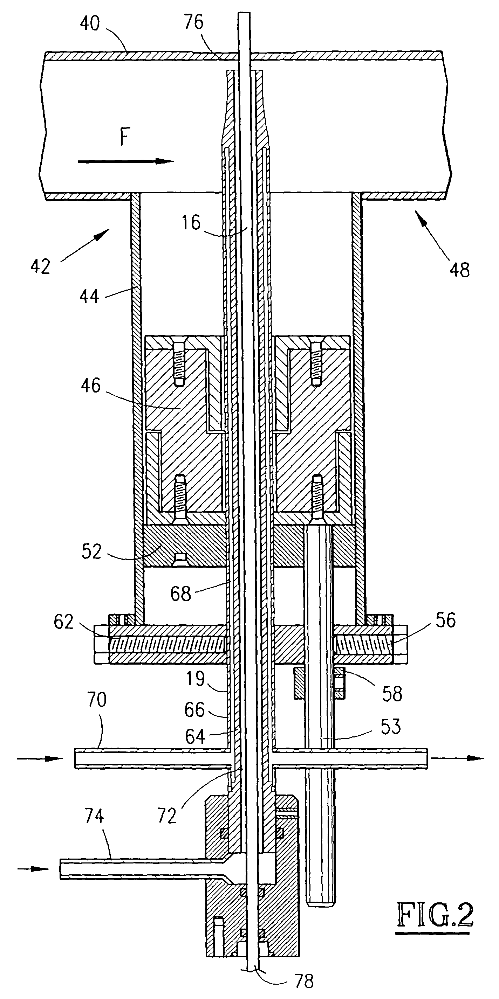

On voit également sur la figure 1 que le tube à décharge 16 est disposé dans un manchon 19 en matériau conducteur dont la structure sera décrite en détail par la suite en référence à la figure 2.

Il est relié en aval, en considérant le sens d'écoulement du gaz à épurer, à l'extérieur de l'applicateur de champ 10, à une canalisation 20 d'acheminement du gaz excité vers une unité de traitement 22, constituée d'une cartouche contenant un élément alcalin tel que de la chaux sodée ou une solution aqueuse alcaline, et d'une unité de déshydratation du gaz 24.

Par ailleurs, la canalisation 20 comporte deux ensembles de dérivation 26 et 28 commandés par des vannes correspondantes, telles que 30 et 32, et sur lesquelles viennent se monter de façon étanche des cellules d'échantillonnage 34 et 36 en vue de l'analyse des gaz par spectrométrie infrarouge à transformée de Fourier.

Ces cellules sont de cellules de type simple passage "Spectra-Tec" d'une longueur d'environ 100 mm, ce qui donne une limite de détection amplement suffisante pour l'application envisagée. Elles sont réalisées en acier inoxydable pour éviter la génération de produits supplémentaires qui ne manqueraient pas d'apparaître dans le cas d'une cellule en silice susceptible d'être attaquée par certains des produits fluorés à la suite du passage du gaz dans la décharge créée dans le tube 16. Les fenêtres des cellules sont réalisées en BaF₂, matériau très peu absorbant dans le domaine des longueurs d'ondes considérées pour l'analyse par spectrométrie infrarouge.

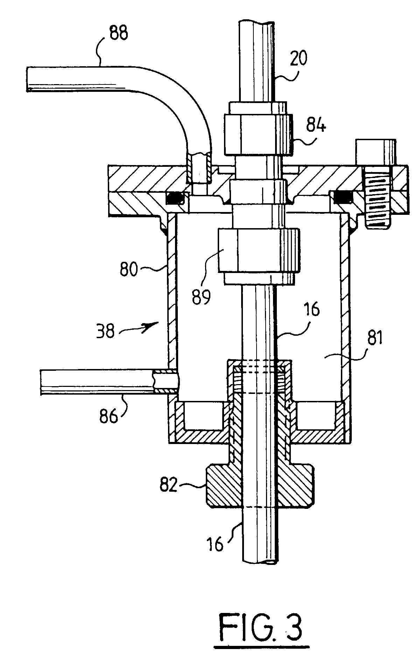

On voit enfin sur la figure 1 que le tube à décharge 16 est raccordé à la canalisation 20 par l'intermédiaire d'une cartouche de refroidissement 38 dont la structure sera décrite par la suite en détail en référence à la figure 3.

La description de l'applicateur d'onde de surface 10 va maintenant être faite en référence à la figure 2.

Comme mentionné précédemment, l'applicateur 10 est de préférence constitué par un applicateur surfatron-guide.

Il comporte une première partie 40 formant guide d'onde proprement dit destinée à l'acheminement du rayonnement micro-onde guidé par le guide d'onde 12 et incident selon le sens désigné par la flèche F sur cette figure et une deuxième partie dite d'adaptation d'impédance coaxiale 42 elle même composée d'une première partie 44 sensiblement cylindrique, coaxiale au tube à décharge 16, dans laquelle est monté axialement déplaçable un piston d'accord 46 formant piège en quart d'onde et une deuxième partie 48 également sensiblement cylindrique disposée dans le prolongement du guide d'onde 12 et équipée d'un piston mobile 50 en guide d'onde, représenté sur la figure 1.

On voit sur la figure 2 que le piston d'accord 46 est fixé sur une rondelle 52 de coulissement avantageusement réalisé en Téflon®.

Le surfatron-guide 10 est en outre muni de moyens de commande du réglage de la position axiale des pistons 46 et 50, constitués par des tiges 53 et 54 actionnables manuellement par un opérateur ou munies de moyens moteurs, en vue de l'ajustement en impédance du système générateur de micro-onde/guide d'onde avec le système surfatron-guide/plasma au moyen du réglage de la position du piston d'accord 46 et du piston en guide d'onde 50.

Il est à noter que le piston coaxial 46 assure un court-circuit sans contact au moyen d'un piège en quart d'onde permettant un fonctionnement à grande puissance ainsi qu'un entretien sensiblement nul.

En outre, une vis 56 est prévue dans le corps du surfatron-guide 10 en vue du blocage du piston d'accord 46 en position après réglage.

On voit en outre sur la figure 2 qu'une butée 58 de limitation du déplacement axial du piston d'accord 46 est prévue sur la tige de commande 53 correspondante en vue du préréglage de l'accord.

Comme mentionné précédemment, le surfatron-guide est muni intérieurement d'un manchon cylindrique 19 à l'intérieur duquel est placé le tube à décharge 16. Il est monté axialement déplaçable par rapport à la première partie 44 coaxiale au tube à décharge 16 et au piston d'accord 46, en vue du réglage de la largeur de l'interstice de lancement du surfatron-guide.

En outre, le corps du surfatron-guide 10 comporte un organe de maintien du manchon 19 en position, constitué par une vis 62 transversale.

Le manchon 19 comporte deux parois 64 et 66 coaxiales délimitant entre elles une chambre cylindrique 68 en communication avec un circuit 70 de refroidissement par eau, partiellement représentée sur la figure 2, et permettant d'assurer le refroidissement du manchon 19 au cours de la décharge dans le tube 16.

Par ailleurs, le tube à décharge 16 délimite avec la paroi interne 64 du manchon 60 un interstice 72 sensiblement cylindrique raccordé à une canalisation 74 d'alimentation en gaz sous pression (partiellement représentée) en vue de provoquer un courant de gaz forcé dans l'interstice 72 entre le tube à décharge 16 et le manchon 19 pour assurer un refroidissement supplémentaire. Le gaz de refroidissement est par exemple de l'air sous pression, formé par un compresseur.

Ces moyens de refroidissement sont nécessaires pour le fonctionnement à la pression atmosphérique à laquelle le plasma atteint des températures nettement inférieures à celles des électrons du gaz mais néanmoins susceptible d'entraîner, en l'absence de refroidissement, la fusion du tube à décharge 16.

On voit enfin sur la figure 2 qu'une extrémité libre du manchon 19 débouche dans le guide d'onde 40 et délimite avec la paroi interne ce celui-ci un interstice de lancement 76 ou "gap" par l'intermédiaire duquel l'énergie micro-onde localisée en ce point est transmise au plasma par une onde de surface.

Il est à noter que la section de la paroi du surfatron-guide 10 voisine de l'interstice de lancement 76 est amincie à une épaisseur comprise entre 0,5 et 0,7 mm par enlèvement de matière dans la paroi externe du guide d'onde 40 afin de ne pas entraver l'excitation des ondes de surface, faute de quoi des pertes importantes de puissance micro-onde apparaîtraient par échauffement de la structure constitutive de la paroi du guide d'onde 40.

Il est également à noter que l'interstice de lancement 76 est réglable par déplacement axial du manchon 19 dans la première partie coaxiale 44 et blocage à l'aide de la vis 62. Ce réglage permet d'optimiser l'accord d'impédance en évitant la formation d'un arc électrique dans l'interstice de lancement 76 lorsque l'installation fonctionne à des puissances micro-onde élevées.

Enfin, l'extrémité libre 78 du tube à décharge 16 est reliée à une source de gaz à traiter, non représentée, constituée par exemple par une installation de distillation d'air, de manière à faire circuler ce gaz dans la surfatron-guide.

En fonctionnement, le rayonnement micro-onde produit par le générateur 14 est guidé par le guide d'onde 12 vers le surfatron-guide 10 qui concentre le rayonnement incident dans l'interstice de lancement 76 de manière à faire se propager dans le tube à décharge 16 et dans le mélange gazeux qu'il contient une onde électromagnétique progressive de surface dont le champ électrique associé engendre et maintient une décharge dans le mélange gazeux.

Il est à noter que la construction du surfatron-guide 10 permet que le champ électrique de l'onde incidente soit communiqué au gaz plasmagène selon la direction axiale du tube à décharge 16 à travers l'interstice de lancement 76.

Le plasma ainsi engendré dans le gaz à purifier se présente sous la forme d'une colonne et sa densité électronique décroît à partir de l'interstice de lancement selon une fonction connue.

De préférence, afin d'obtenir un temps de résidence des particules d'impuretés assez long pour obtenir une modification de la quasi-totalité de ces impuretés, l'installation est complétée par des moyens de réglage de la dimension longitudinale du plasma dans le tube à décharge 16. Ces moyens sont constitués par un dispositif de réglage de la puissance micro-onde équipant de façon classique le générateur de micro-onde 14 et permettant de régler la dimension longitudinale de la zone dans laquelle est créé le champ électrique, la longueur de cette zone augmentant, de facon connue, lorsqu'on augmente la puissance.

Il est par ailleurs à noter que le diamètre du tube à décharge 16 est choisi suffisamment petit, par exemple avec un diamètre externe égal à 8 mm et un diamètre interne égal à 4 mm, pour obtenir un unique filament de plasma centré sur l'axe du tube qui puisse être établi de manière stable et reproductible.

En effet, lorsqu'on opère à pression atmosphérique notamment avec des gaz à faible conductivité thermique comme le xénon, le krypton et l'argon, pour des diamètres suffisamment grands, le diamètre du plasma lui-même n'augmente pas quand on augmente le diamètre interne du tube, de sorte que le gaz à traiter circulant à la périphérie du tube subit une excitation de plus en plus atténuée.

En outre, plusieurs filaments de plasma pourraient se former avec un comportement erratique et une possibilité de collage contre la paroi du tube à décharge ce qui pourrait provoquer une dégradation de ce dernier.

On conçoit toutefois, qu'afin d'augmenter les débits admissibles, il est possible d'associer en parallèle plusieurs tubes à décharge de petits diamètres, comportant chacun son applicateur de champ pour la génération du plasma, et de traiter ensuite le flux de gaz total sur un unique élément réactif. On peut aussi, pour augmenter le temps de résidence des molécules dans le milieu plasma, créer plusieurs décharges en série dans le même tube au moyen de plusieurs applicateurs de champ.

Comme mentionné précédemment, la disposition qui vient d'être décrite permet de créer, sur le trajet d'un gaz plasmagène à purifier et dans celui-ci, un plasma qui est le siège d'excitations énergétiques électroniques très élevées, correspondant à des températures de plusieurs dizaines de milliers de Kelvin, permettant ainsi, par collision électronique, d'exciter les atomes et molécules constitutifs du gaz, et en particulier de transformer les molécules d'impuretés, telles que CF₄ et CH₄, d'un état relativement stable chimiquement vers un état réactif ce qui permet ensuite de les éliminer soit à la suite de leur condensation immédiate et spontanée sous forme de dépôts ou de particules solides (polymères fluorocarbonés, noir de carbone...) soit en les faisant réagir avec un réactif solide ou liquide correspondant, comme cela sera décrit par la suite. On conçoit que les atomes et molécules du gaz à épurer sont également excitées dans la décharge, mais ils se désexcitent et/ou se recombinent immédiatement à la sortie de cette dernière et d'autre part ne réégissent pas avec les composés réactifs solides ou liquides sur lesquels circule ensuite le gaz à épurer.

On notera que le plasma créé par cette installation est un plasma hors d'équilibre thermodynamique local (ETL).

Dans ce type de plasma, seuls les électrons présents dans le milieu sont portés à des énergies élevées, les températures des espèces ioniques et neutres restant beaucoup plus basses, voire pour certaines assez proches de la température ambiante.

Dans un système qui n'est pas en équilibre thermodynamique, un grand nombre d'états différents peuvent être atteints en jouant sur les paramètres de la décharge, par exemple la fréquence du champ électromagnétique, le diamètre du tube à décharge la densité de puissance microonde absorbée, et la composition du gaz à traiter, en y ajoutant des adjuvants.

Par contre, si l'on considère le cas des plasmas en équilibre thermodynamique local (ETL), où toutes les espèces se trouvent à une même température très élevée, le bilan réactionnel total n'est pas toujours favorable pour l'accomplissement d'un processus de transformation chimique particulier, et surtout, il ne peut être modifié en jouant sur des paramètres de la décharge.

Comme dans tout système en équilibre thermodynamique local l'état final de la transformation est déterminé essentiellement par la température d'ensemble du système.

Des chemins de réaction indésirables peuvent être favorisés dans ce cas, aussi bien que les transformations élémentaires utiles au résultat cherché. De plus, l'enthalpie très importante du milieu entraîne des contraintes d'implantation (refroidissement ...) et l'entretien de cette enthalpie est énergiquement très coûteux.

On conçoit donc que les décharges réalisées dans cette installation en dehors de l'équilibre thermodynamique local sont à la fois plus efficaces énergétiquement et offrent la possibilité de trouver des conditions de fonctionnement davantage optimisées pour la réalisation de la transformation des molécules envisagées.

En outre, à l'aide du réglage de la longueur du plasma dans le tube à décharge 16 il est possible de régler le temps de résidence des molécules et impuretés nécessaire à leur modification en espèces réactives à une valeur juste suffisante pour amener la concentration résiduelle d'impuretés en fin de traitement à un niveau fixé à l'avance, en minimisant de ce fait la consommation électrique du système.

Comme mentionné précédemment, une unité de refroidissement 38 est interposée entre le tube à décharge 16 et la canalisation 20 en vue de l'évacuation des calories dans la zone de raccordement. En effet, dans le cas du krypton, on contaste un dégagement de chaleur très intense non pas au niveau du tube diélectrique, mais immédiatement après son raccordement avec la canalisation 20, dans une région qui se trouve située à plusieurs dizaines de cm en aval de la décharge. Ce phénomène peut s'appliquer par la désexcitation différée d'états énergétiques métastables du krypton, du fait de la vitesse élevée du gaz dans le tube à décharge (fort débit et faible diamètre).

Il est possible également que la désexcitation s'effectue préférentiellement dans une canalisation en métal ou en polymère par rapport au tube de silice.

Sans moyens de refroidissement, la canalisation 20 atteint rapidement des températures incompatibles avec le maintien de son intégrité, même dans le cas où elle est réalisée en acier inoxydable (métal porté au rouge après quelques minutes de fonctionnement). L'installation comporte donc, à la sortie du tube à décharge, un échangeur thermique constitué d'un serpentin en cuivre ou en acier inoxydable, dans lequel circule le flux gazeux à traiter, ledit serpentin étant enfermé dans une enceinte en acier à l'intérieur de laquelle est établie une circulation d'eau.

L'échangeur thermique est dimensionné de manière à ce que la température de la canalisation à la sortie de ce dernier demeure suffisamment modérée en régime de fonctionnement permanent, typiquement inférieure à 100°C.

En outre, la nécessité de ménager une liaison démontable entre le tube à décharge et l'échangeur thermique oblige à utiliser des férules d'étanchéité en matériau polymère (Téflon®), dont il faut également impérativement limiter l'échauffement. C'est pourquoi on a prévu également une cartouche de refroidissement du raccord par circulation d'eau, que l'on va maintenant détailler.

En se référant à la figure 3, on voit que la cartouche de refroidissement comporte un carter 80 délimitant ultérieurement une chambre 81 et muni à une de ses extrémités d'un raccord 82 de fixation sur le tube à décharge 16 et à son extrémité opposée d'une bride 84 de raccordement du tube à décharge 16 et de la canalisation 20.

Par ailleurs, la cartouche 38 est munie d'une conduite 86 d'admission d'eau dans la chambre 81 et d'une conduite 88 d'évacuation d'eau.

En fonctionnement, le gaz circulant dans le tube à décharge 16 échange des calories avec l'eau présente dans la chambre 81 permettant ainsi de conserver l'intégrité des férules 89 en Téflon® du raccord. A noter également que pour un fonctionnement continu sur de longues durées, on préfère réaliser la canalisation 20 en acier inoxydable 316L plutôt qu'en un polymère de haute résistance aux milieux corrosifs comme du Téflon® PFA (perfluoroalkaxy). Il semble en effet plus satisafaisant de remplacer de temps à autre une canalisation métallique se corrodant relativement lentement du fait de la faible concentration d'espèces acides, que de risquer un incident par suite d'une surchauffe du polymère.

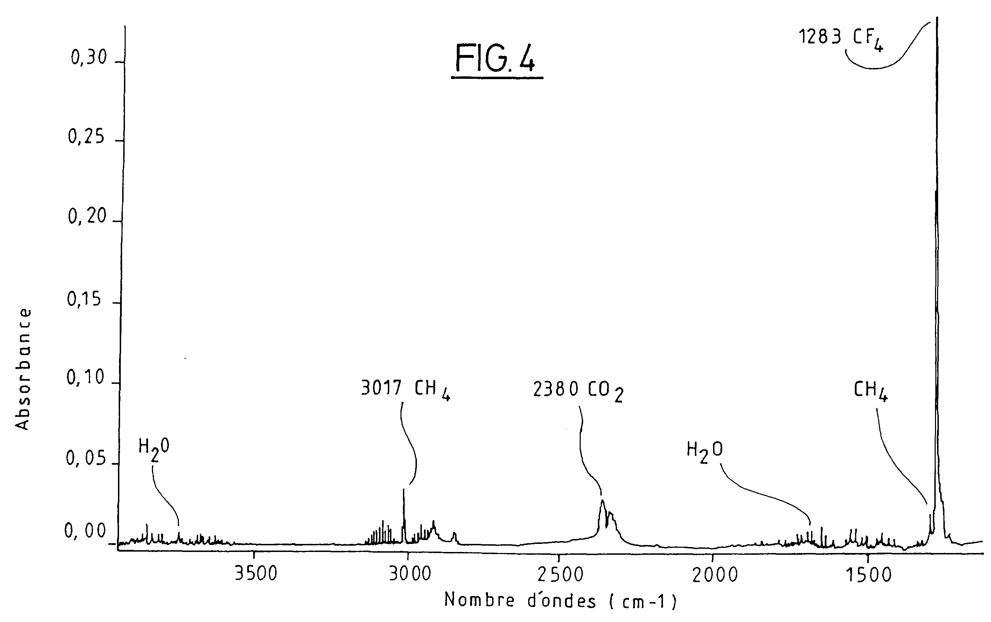

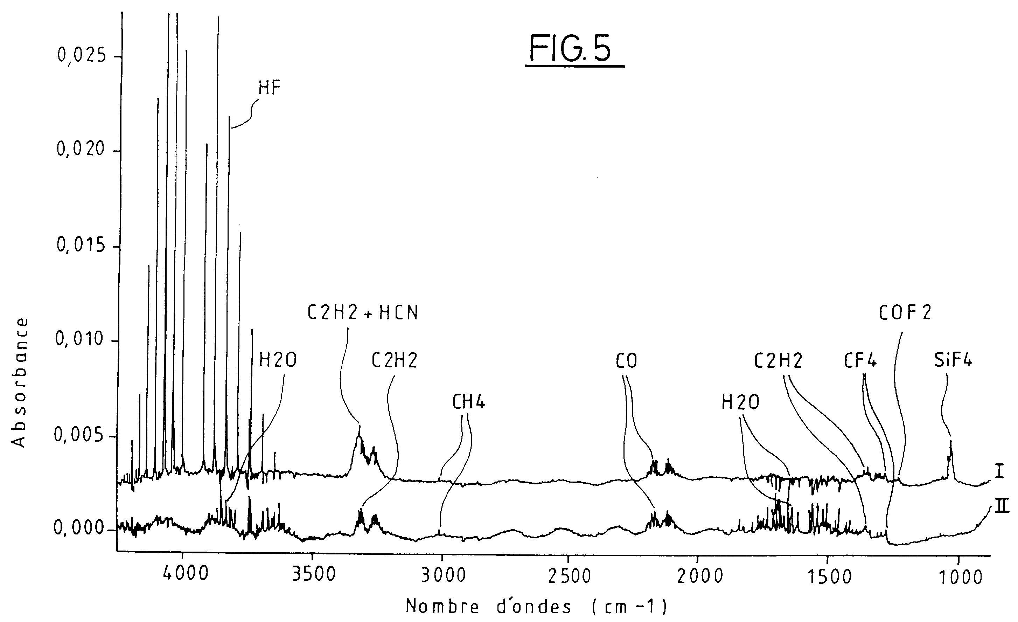

Des résultats expérimentaux vont maintenant être exposés en référence aux figures 4 et 5 qui représentent respectivement le spectre d'absorbance infrarouge en fonction du nombre d'ondes du krypton en sortie de l'installation en l'absence de décharge et en présence de décharge, et obtenus à l'aide des cellules d'analyse 34 et 36.

L'analyse effectuée dans ces cellules 34 et 36 n'est réalisée qu'après l'établissement d'un régime de fonctionnement stable de l'installation, afin d'éviter de prendre en compte tout phénomène transitoire pouvant notamment résulter de processus d'adsorption/désorption sur les parois internes du circuit ou sur le lit de chaux sodée.

Pendant cette phase de stabilisation, la cellule est isolée et le gaz s'écoule par les branches de dérivation correspondantes. Les séquences d'ouverture et de fermeture des vannes pour le prélèvement sont reproduites de façon identique et l'on vérifie que l'on opère toujours à une pression constante dans la cellule.

Un spectre de référence est enregistré avec une cellule purgée sous azote pur. La transmission nette T de l'échantillon de gaz est obtenue par division avec ce spectre de référence qui intègre la contribution de l'optique du spectromètre, du spectre d'émission de la source et de la réponse des détecteurs, tous deux susceptibles de dériver dans le temps.

L'absorbance est calculée selon la loi de Beer-Lambert suivant la relation A = Log (1/T).

L'identification des produits est effectuée par comparaison avec des spectres de référence mémorisés et correspondant chacun à un produit connu.

Pour la quantification des composés ainsi identifiés, on utilise des échantillons d'étalonnage en supposant que l'aire des pics est proportionnelle au nombre de liaisons vibrantes par unité de volume.

En se référant tout d'abord à la figure 4, on voit que l'analyse du krypton révèle des pics à 1283 cm⁻¹ et à 3017 cm⁻¹ correspondant respectivement au CF₄ et au CH₄. Ces pics correspondent à des concentrations initiales dans le krypton à épurer de 172 ppm de CF₄ et de 335 ppm de CH₄.

Par ailleurs, des pics caractéristiques de H₂O sont observés au voisinage de 1500 cm⁻¹ et à des nombres d'ondes supérieurs à 3500 cm⁻¹, ainsi que des pics caractéristiques de CO₂ atmosphérique résiduel dans le compartiment du spectromètre, à 2380 cm⁻¹.

On notera par ailleurs que le gaz à épurer ne contient pas d'autres impuretés à une concentration notable.

En se référant maintenant à la figure 5, sur laquelle on a représenté le spectre d'absorbance du krypton en sortie de la décharge (courbe I) et en sortie de l'installation (courbe II).

Comme précédemment, l'effluent gazeux à traiter est constitué de krypton, sous un débit de 20 1 standard/mn (slm), soit 1,2 m³/h et une puissance micro-onde incidente de 1500 W.

Afin d'améliorer l'accomplissement du processus de transformation de CF₄ en espèces réactives, on ajoute de l'oxygène au krypton avant sa circulation dans le tube diélectrique 16.

Toutefois, les concentrations d'oxygène admissibles dans un tel plasma à onde de surface engendré dans du krypton sont très limitées par rapport à des plasmas engendrés dans d'autres gaz. Plus particulièrement, au delà d'une concentration en oxygène sensiblement du même ordre de grandeur que celle du CF₄ existant dans le gaz incident, le plasma change très rapidement de couleur et devient instable et multifilamentaire. Le débit maximal d'oxygène est de préférence, pour les conditions considérées, fixé à 20 cm³ standard/mn (sccm).

Préalablement, le réglage de l'accord d'impédance du surfatron-guide 10 est effectué en agissant sur la longueur de l'interstice de lancement 76, sur la position du piston d'accord coaxial 46 et sur la position du piston en guide d'onde 50.

Il est à noter que seuls les deux derniers réglages, à savoir du piston d'accord 46 et du piston en guide d'onde 50 peuvent être manoeuvrés en temps réel, le plasma étant allumé, en utilisant les tiges de manoeuvre 53 et 54.

Par ailleurs, l'interstice de lancement 76 ne peut être ajusté que par approximation successive, les modifications étant faites sans allumer le plasma pour ne pas exposer l'opérateur à un rayonnement de fuite incompatible avec les normes de sécurité.

L'accord étant réalisé, on obtient une puissance réfléchie de quelques watts seulement, soit moins de 1% de la puissance incidente.

La décharge étant établie, l'analyse en amont de la cartouche de refroidissement 38 révèle (courbe I) une réduction considérable de l'amplitude des pics caractéristiques de CF₄ et CH₄ respectivement à 1283 cm⁻¹ et 3017 cm^{-1,} malgré une augmentation de l'échelle des ordonnées dans un rapport de 10 et l'apparition de pics caractéristiques de produits formés par les réactions dans la décharge, constituées d'une part d'espèces acides, telles que HF, COF₂, SIF₄ et HCN, et d'autre part de CO et C₂H₂.

Sur la courbe II, on voit qu'en aval de la cartouche de gel de silice, les espèces acides ne sont plus détectables.

Une quantification des impuretés dans le krypton en sortie de l'installation effectuée par comparaison à des signaux de spectrométrie infrarouge à transformée de Fourrier délivrés à partir de mélange d'étalonnage de CF₄ et CH₄ révèle une concentration résiduelle de 0,3 ppmv en CF₄ et de 3 ppmv pour le CH₄. On constate donc une diminution considérable de la concentration en impuretés, notamment en CF₄ qui se situe en deça des limites des spécifications des réglementations.

En ce qui concerne le méthane, il serait possible d'abaisser encore les concentrations résiduelles à l'aide de techniques classiques en ajoutant un étage supplémentaire utilisant des techniques de traitement thermique de type "deoxo" permettant de façon classique de détruire le CH₄, monté en amont de l'installation, afin d'éviter tout dépôt dans le tube à décharge, ou encore un étage supplémentaire de traitement par plasma susceptible de fonctionner à des débits d'oxygène plus élevés pour le traitement du méthane. Il y aurait alors lieu de prévoir en outre une unité de décarbonation pour retirer le Co₂ résiduel.

On remarquera par ailleurs que la concentration résiduelle de CO dans le gaz épuré est de l'ordre de la valeur moyenne d'exposition légale, soit 50 ppmv. Il est toutefois possible de l'extraire de façon aisée du gaz épuré par des étapes de distillation cryogénique ultérieures en vue de son rejet dans l'atmosphère.

En outre, tant C₂H₂ que CO₂ peuvent être très facilement éliminés par adsorption sur un tamis moléculaire.

Dans l'exemple de réalisation décrit sur la figure 1, l'unité de déshydratation de gaz est constituée d'un gel de silice. Il est toutefois possible de remplacer ce gel par un tamis moléculaire par exemple de type "13X". En outre, un filtre particulaire peut être disposé en aval du tamis de façon à éviter que des particules de solides carbonés ne se retrouvent en sortie de l'installation.

En outre, l'installation peut être avantageusement complétée par un humidificateur de type classique placé en amont de la chaux sodée afin d'éviter la perte d'efficacité suite à la dessiccation progressive de celle-ci sous l'effet de la circulation du gaz à épurer en fonctionnement continu, et mettant en contact le gaz en circulation avec de l'eau afin que ce gaz se charge en vapeur.

Par ailleurs, la description qui vient d'être faite s'applique à l'épuration du krypton et du xénon, mais bien entendu le procédé d'épuration décrit précédemment s'applique également à tout type de gaz plasmagène, notamment l'argon, et en général à l'épuration de gaz, tels que Aᵣ,Nₓ,Nₑ,kᵣ-,Xₑ,Hₑ,O₂,CO₂,H₂.

Toutefois, l'invention permet d'épurer, de façon particulièrement efficace, du krypton, qui est capable de générer un plasma ayant un temps de résidences relativement élevé et dont les atomes sont relativement froids.

Par ailleurs, les impuretés mentionnées précédemment sont principalement constituées de CF₄ et de CH₄, mais bien entendu l'invention s'applique également à l'épuration des gaz en d'autres impuretés, en particulier les autres gaz perfluorés ou hydrofluorocarbonés.

Enfin, dans la description de l'invention faite précédemment, le plasma est créé à l'aide d'un surfatron-guide. Il est également possible, en variante, de doter l'installation d'autres dispositifs de création de plasma à haute fréquence, par exemple un surfaguide ou un "ro-box" en ce qui concerne les ondes de surface, ou éventuellement un dispositif à cavité résonante de type connu, ou encore une des structures conductrices de propagation du champ également connues : structure en échelle, spire ou hélice entourant extérieurement le tube diélectrique.

Dans ce dernier mode de réalisation, dans lequel l'onde progressive n'est pas une onde de surface, le réglage de la dimension longitudinale du plasma s'effectue en dimensionnant de façon appropriée le dispositif de création de plasma de sorte qu'il s'étende sur une longueur suffisante le long du tube à décharge afin d'obtenir la longueur de plasma désirée.

La description de l'invention faite précédemment a été appliquée à l'épuration du krypton ou du xénon, ou à un mélange de ces deux gaz.

Bien entendu, et comme mentionné précédemment, l'invention s'applique également au traitement d'autres gaz plasmagènes, et en particulier au traitement de l'azote, gaz dans lequel les plasmas atteignent des températures sensiblement plus élevées que dans d'autres gaz, comme l'argon.

Dans ce cas, le fluide de refroidissement circulant dans la chambre 68 délimitée par le tube diélectrique et le cylindre externe 66 du manchon 19 est constitué de préférence par une polyalphaoléfine isoparaffinique (PAO) vendue par la société LUBRI DELTA Inc., Québec utilisée classiquement dans les circuits hydrauliques.

Comme cela est classique, une décharge d'onde de surface dans de l'azote présente moins de contractions radiales qu'un plasma d'argon, de krypton ou de xénon et la zone luminescente est délocalisée radialement dans toute la section du tube à décharge.

Afin de minimiser la densité de plasma au voisinage de la paroi interne du tube, trois paramètres doivent être déterminés dans le cas de la génération d'un plasma dans de l'azote, à savoir : le diamètre interne du tube à décharge, le diamètre des deux orifices ménagés dans la paroi constitutive de l'excitateur pour le passage du tube, et l'amincissement de la paroi de l'excitateur voisine de la zone 76 de concentration des ondes incidentes.

Ainsi, alors que le diamètre interne du tube à décharge est choisi égal par exemple 4 mm dans le cas du krypton ou du xénon, dans le cas de la génération d'un plasma dans l'azote, le diamètre interne du tube 16 est augmenté jusqu'à une valeur égale à 14 mm de manière à pouvoir accroître le débit total de gaz à épurer pour un temps de résidence dans la décharge donné, sans diminuer sensiblement l'efficacité de conversion des impuretés à traiter, et tout en minimisant la densité de plasma au voisinage de la paroi interne du tube.

On observe toutefois qu'au delà d'un certain diamètre, l'efficacité de destruction des impuretés décroît, en particulier en raison de la diminution de la densité de la décharge. Ainsi, de préférence, on choisit un diamètre interne égal à 10 mm.

Par ailleurs, afin d'éviter la dégradation du rendement énergétique dans le cas de l'utilisation de l'azote comme gaz plasmagène, l'orifice ménagé dans la pari de l'excitateur pour le passage du tube à décharge 16, au voisinage de la zone 76 de concentration des ondes incidentes, est choisi égal à environ 13 mm dans le cas de l'utilisation d'un tube à décharge 16 ayant un diamètre interne de 10 mm et une épaisseur de 0,5 ou 1 mm. L'autre orifice prévu à l'opposé du premier dans la paroi de l'excitateur 10 pour le passage du manchon 19 et du tube 16 a un diamètre sensiblement égal à 22mm, pour un manchon 19 ayant un diamètre externe compris entre 16 et 18 mm.

On notera enfin que, dans l'exemple de réalisation décrit précédemment, la section de la paroi du surfatron-guide 10 voisine de l'interstice de lancement 76 est amincie par enlèvement de matière dans la paroi externe du guide d'onde 40 afin de ne pas entraver l'excitation des ondes de surface.

Il est également possible, en variante, afin de faciliter les opérations de réparation de l'applicateur en cas de développement d'un arc au niveau de l'interstice de lancement, de prévoir la partie amincie de la paroi de l'excitateur sous la forme d'une pièce rapportée circulaire munie d'un rebord d'ajustement, et soudée au reste de la paroi de l'excitateur.

## Revendications

1. Procédé d'épuration d'un gaz, caractérisé en ce qu'il comporte les étapes consistant à:
- faire circuler ledit gaz à épurer dans un tube creux diélectrique (16) ;
- créer dans ledit gaz un champ électrique au moyen d'une onde électromagnétique progressive circulant dans ledit tube diélectrique (16) et adaptée pour créer dans le gaz un plasma à pression atmosphérique hors d'équilibre thermodynamique local en vue de la dissociation des impuretés du gaz pour former des composés réactifs ; et
- faire réagir lesdits composés réactifs formés avec un élément réactif (22,24) correspondant en vue de leur élimination du gaz à épurer.

2. Procédé selon la revendication 1, caractérisé en ce que l'onde électromagnétique est une onde de surface produite au moyen d'un excitateur d'onde de surface (10) du type surfatron-guide.

3. Procédé selon l'une des revendications 1 et 2, caractérisé en ce que ledit champ électrique étant créé dans une zone du tube diélectrique (16), il comporte en outre une étape de réglage de la dimension longitudinale de ladite zone pour régler la longueur dudit plasma.

4. Procédé selon l'une quelconque des revendications 1 à 3, caractérisé en ce que l'on ajoute de l'oxygène audit gaz à épurer, préalablement à ladite étape de circulation du gaz dans le tube diélectrique (16).

5. Procédé selon l'une quelconque des revendications 1 à 4, caractérisé en ce que ladite étape consistant à faire réagir les composés gazeux réactifs consiste à faire réagir les composés gazeux réactifs avec un élément alcalin (22), notamment de la chaux sodée ou une solution aqueuse alcaline.

6. Procédé selon l'une quelconque des revendications 1 à 5, caractérisé en ce qu'il comporte en outre une étape de déshydratation du gaz postérieure à l'étape de réaction des composés réactifs avec un élément réactif correspondant.

7. Procédé selon l'une quelconque des revendications 1 à 6, caractérisé en ce que ledit gaz est composé de krypton ou de xénon.

8. Procédé selon l'une quelconque des revendications 1 à 7, caractérisé en ce que les impuretés dudit gaz sont choisies parmi le méthane et les gaz perfluorés, notamment le tétrafluorométhane.

9. Installation d'épuration d'un gaz, pour la mise en oeuvre d'un procédé d'épuration selon l'une quelconque des revendications 1 à 8, caractérisée en ce qu'elle comporte au moins un excitateur (10) d'onde progressive à haute fréquence associé à un guide d'onde (12) adapté pour acheminer les ondes progressives produites par lesdits au moins un excitateur (10) d'onde vers au moins un tube creux diélectrique (16) dans lequel ledit gaz est destiné à circuler, pour y créer un plasma à pression atmosphérique d'ionisation et d'excitation des molécules dudit gaz à épurer en vue de la dissociation des impuretés dudit gaz pour former des composés réactifs, notamment fluorés, et au moins une unité de traitement (22,24) desdits composés réactifs disposée en sortie d'un tube creux diélectrique (16) correspondant.

10. Installation selon la revendication 9, caractérisée en ce que chaque excitateur (10) est constitué par un excitateur d'onde de surface et comporte un manchon cylindrique (19) en matériau conducteur à l'intérieur duquel est monté un tube diélectrique (16) correspondant et une zone (76) de concentration des ondes incidentes dans un espace compris entre la paroi interne dudit excitateur (10) et une extrémité libre dudit manchon (19) en vue d'y créer un champ électrique coaxial audit tube (16).

11. Installation selon la revendication 10, caractérisée en ce que ledit manchon (19) comporte un cylindre interne (64) dans lequel est monté ledit tube diélectrique (16) et un cylindre externe (66) délimitant avec ledit cylindre interne (64) une chambre (68) de refroidissement alimentée en un liquide de refroidissement.

12. Installation selon l'une des revendications 10 et 11, caractérisée en ce que ledit manchon (19) et ledit tube diélectrique (16) sont séparés par un espace (72) cylindrique et en ce qu'elle comporte des moyens d'alimentation (74) dudit espace en un gaz de refroidissement.

13. Installation selon l'une quelconque des revendications 10 à 12, caractérisée en ce que ledit gaz à épurer dans lequel le plasma est destiné à être engendré étant constitué d'azote, le diamètre interne du tube à décharge est inférieur ou égal à 14 mm, de préférence égal à environ 10 mm.

14. Installation selon la revendication 13, caractérisée en ce que la paroi de l'excitateur (10) comporte, au voisinage de la zone (76) de concentration des ondes incidentes, un orifice pour le passage du tube à décharge (16) de diamètre sensiblement égal à 13 mn pour un tube (16) ayant un diamètre interne de 10 mn, et un deuxième orifice pour le passage du manchon (19) et du tube (16) de diamètre sensiblement égal 22 mn.

15. Installation selon l'une quelconque des revendications 9 à 14, caractérisée en ce que ledit tube diélectrique (16) est constitué de silice.

16. Installation selon l'une quelconque des revendications 10 à 15, caractérisée en ce que chaque excitateur d'onde de surface (10) est muni de moyens de réglage d'impédance comportant un piston (46) formant piège en quart d'onde coaxial audit manchon et monté axialement déplaçable dans ledit excitateur (10).

17. Installation selon l'une quelconque des revendications 9 à 16, caractérisée en ce qu'elle comporte en outre des moyens de réglage de la dimension longitudinale du plasma créé dans le tube creux diélectrique (16).

18. Installation selon l'une quelconque des revendications 8 à 17, caractérisée en ce que la paroi de chaque excitateur (10) voisine de la zone (76) de concentration des ondes incidentes est amincie.

19. Installation selon la revendication 18, caractérisée en ce que la partie amincie de la paroi de chaque excitateur (10) est constituée par une pièce rapportée soudée au reste de ladite paroi.

20. Installation selon l'une quelconque des revendications 9 à 19, caractérisée en ce que lesdites au moins une unité de traitement (22) desdits composés réactifs sont constituées chacune par une cartouche de chaux sodée.

21. Installation selon la revendication 20, caractérisée en ce qu'elle comporte un humidificateur disposé en amont de la cartouche de chaux sodée (22).

22. Installation selon l'une quelconque des revendications 9 à 21, caractérisée en ce qu'elle comporte en outre une unité (24) de déshydratation dudit gaz à épurer disposée en aval de ladite unité (27) de traitement desdits composés réactifs.

23. Installation selon l'une quelconque des revendications 10 à 22, caractérisée en ce que lesdits excitateurs (10) d'onde de surface sont constitués chacun par un excitateur de type surfatron-guide.
